# EUROPEAN PATENT APPLICATION

(11) **EP 2 230 037 A1**
(43) Date of publication of application: **22.09.2010**
(21) Application number: 10153555.7
(22) Date of filing: 14.02.2010
(51) Int. Cl.: B22F 3/17, B22F 3/20, B22F 5/04, B23P 15/00, C22F 1/10, B22F 5/00

(54) **Method of manufacture of a dual microstructure impeller**

(30) Priority: 13.03.2009 US 403607
(71) Applicant: Honeywell International Inc., Morristown, NJ 07962 (US)
(72) Inventor: Rice, Derek Anthony, Morristown, NJ 07962-2245 (US); Kantzos, Pete, Morristown, NJ 07962-2245 (US); Hann, Brian, Morristown, NJ 07962-2245 (US)
(74) Representative: Buckley, Guy Julian

(57) **Abstract**

There is provided a method for fabricating a dual microstructure component that may in turn be machined to fabricate a rotary element such as an impeller (10) characterized as capable of withstanding high heat conditions for use in a gas turbine engine. The method provides a nickel based superalloy suitable for application of an impeller (10) in a gas turbine engine. The bore region (20) is manufactured having a grain size finer than ASTM 10.0 and the body region (22) is manufactured having a grain size coarser than ASTM 7.0. The bore region (20) and the body region (22) define a dual microstructure and an interface (36).

## Description

### TECHNICAL FIELD

The present invention relates to methods and materials for manufacturing gas turbine engine components. More particularly the invention relates to improved methods and materials with which to manufacture impellers and impeller-like rotating components comprising more than one microstructure.

### BACKGROUND

In an attempt to increase the efficiencies and performance of contemporary jet engines, and gas turbine engines generally, engineers have progressively pushed the engine environment to more extreme operating conditions. The harsh operating conditions of high temperature and pressure that are now frequently projected place increased demands on engine components and materials. Indeed the gradual change in engine design has come about in part due to the increased strength and durability of new materials that can withstand the operating conditions present in the modem gas turbine engine.

The compressor stage of the gas turbine engine is one area that has seen increased demands placed on it. For example, increasing performance and reliability demands for gas turbine engines require both high compression ratios and reduced compression stages. Relatively higher compression ratios in turn result in high compressor discharge temperatures. A reduced number of compression stages to accomplish higher compression ratios results in higher compressor stage tip speeds and higher bore stresses. These combined demands have made it very difficult to utilize monolithic alloy impellers for high pressure compressor (HPC) stages of gas turbine engines. It would thus be desirable to develop a high pressure impeller that can withstand the increased pressures and temperatures associated with gas turbine engines. It is also desired that the impeller design be suitable to relatively smaller gas turbine engines.

A rotary compressor such as an impeller undergoes differing stresses at differing locations. Typically a central opening or bore defines an axis about which the rotor spins. In the case of an HPC impeller, multiple airfoils extend radially outward from a bore and axially along the length of the bore.
Additionally impellers wrap tangentially, from an inducer section near the inner diameter to the exducer near the impeller outer diameter. In operation, an impeller receives a fluid, such as air, at an upstream axial position. Due to the rotational movement of the impeller, the air is compressed. Typically, a given volume of air that is being compressed is passed from an upstream position to a downstream position in the impeller. As the air exits the impeller, at an outwardly radial position, it is at a relatively higher pressure and temperature than it was when the air first contacted the impeller.

It should be noted that this general structure of a gas turbine impeller is also true of other rotary devices such as turbines found in turbochargers and turbopumps. The principles of the invention described herein are thus applicable to these devices as well.

As mentioned, an impeller is characterized by differing stresses at different impeller locations. Stresses due to rotation are greatest in the bore section. These stresses arise as a result of the high centrifugal forces that develop during high RPM operation. It is this area where cracks tend to develop and propagate. Hence, it is an important design criterion that materials in this area of the impeller have relatively high strength characteristics.

Differences in temperature also occur at different points in an operating impeller. As previously noted, air enters an individual impeller at a relatively lower temperature and pressure. When this same air exits the impeller it is at a relatively higher temperature and pressure. Thus, the upstream leading edge of an impeller airfoil at the inducer experiences relatively lower temperatures; and the outer radial edge of an impeller, the area where compressed gas exits, the exducer, experiences relatively higher temperatures. As a consequence, materials used in the gas exiting region must be selected to withstand these high temperatures.

Hence there is a need for an improved impeller design and method to manufacture the same. The improved design should take advantage of material characteristics that provide high strength and high temperature performance. It is desired that the impeller, and the method of manufacturing the impeller, provide improved strength performance in bore regions while also providing improved high temperature performance in the outward radial positions. It has therefore been conceived that a dual microstructure approach, combining a high strength bore region having a fine grain size and a high temperature outer blade ring microstructure having a coarse grain size, offers a viable solution. There is a need that the improved impeller design maintains advantageous weight performance of materials. The present invention addresses one or more of these needs.

### BRIEF SUMMARY

The present invention provides a method and materials for fabricating a dual microstructure gas turbine engine rotor. In particular, the method may be applied to dual microstructure impellers characterized as withstanding operating temperatures in excess of approximately 1350°F (732 degree Celsius). The method includes steps to fabricate a dual microstructure element capable of withstanding high operating temperatures.

In one embodiment, and by way of example only, there is provided a method for fabricating a dual microstructure machinable element comprising: providing an intermediate structure including a bore region comprising a nickel based superalloy having a grain size that is finer than ASTM 10.0 and a body region comprising a nickel based superalloy having a grain size that is coarser than ASTM 7.0, the bore region and the body region defining a microstructure interface; and machining the intermediate structure to define the dual microstructure machinable element.

In a further embodiment, still by way of example only, there is provided a method for fabricating a dual microstructure element comprising: providing a nickel based superalloy with high strength properties; atomizing the nickel based superalloy to form an atomized nickel based superalloy powder; forming the atomized nickel based superalloy powder into a bore region having a grain size finer than ASTM 10.0 and a body region having a grain size coarser than ASTM 7.0, the bore region and the body region defining an intermediate structure having a microstructure interface; and machining the intermediate structure to define the dual microstructure element.

In a further embodiment, still by way of example only, there is provided a structure suitable for processing into a turbine impeller comprising: a bore region wherein the bore region comprises a nickel based superalloy with high strength properties having a fine grain size of ASTM 10.0 or finer; and a body region wherein the body region comprises a nickel based superalloy having a coarse grain size of ASTM 7.0 or coarser. The bore region defines a first microstructure and the body region define a second microstructure, the first microstructure and the second microstructure defining a dual microstructure interface.

Other independent features and advantages of the method of fabricating a dual microstructure impeller will become apparent from the following detailed description, taken in conjunction with the accompanying drawings which illustrate, by way of example, the principles of the invention.

### BRIEF DESCRIPTION OF THE DRAWINGS

The present invention will hereinafter be described in conjunction with the following drawing figure, wherein:

FIG. 1 is a schematic view of a prior art impeller;

FIG. 2 is a side view of an impeller cross section illustrating dual microstructures according to an embodiment of the present invention;

FIG. 3 is a side view of an impeller cross section illustrating dual microstructures according to an embodiment of the present invention;

FIG. 4 is a side view of an impeller cross section illustrating dual microstructures according to an embodiment of the present invention;

FIG. 5 is a side view of an impeller cross section illustrating dual microstructures according to an embodiment of the present invention;

FIG. 6 is a side view of an impeller cross section illustrating a step in a method of manufacturing an impeller having dual microstructures according to an embodiment of the present invention;

FIG. 7 is a flow chart depicting an exemplary method for forming a dual microstructure impeller structure according to an embodiment of the present invention; and

FIG. 8 is a flow chart depicting an exemplary method for forming a dual microstructure impeller structure according to an embodiment of the present invention.

### DETAILED DESCRIPTION

The following detailed description of the invention is merely exemplary in nature and is not intended to limit the invention or the application and uses of the invention. Furthermore, there is no intention to be bound by any theory presented in the preceding background of the invention or the following detailed description of the invention. Reference will now be made in detail to exemplary embodiments of the invention, examples of which are illustrated in the accompanying drawings. Wherever possible, the same reference numbers will be used throughout the drawings to refer to the same or like parts. In addition, all grain sizes are given in accordance with known methods for determining average grain size standards as set forth by the American Society for Testing and Materials (ASTM), and in particular ASTM E112."

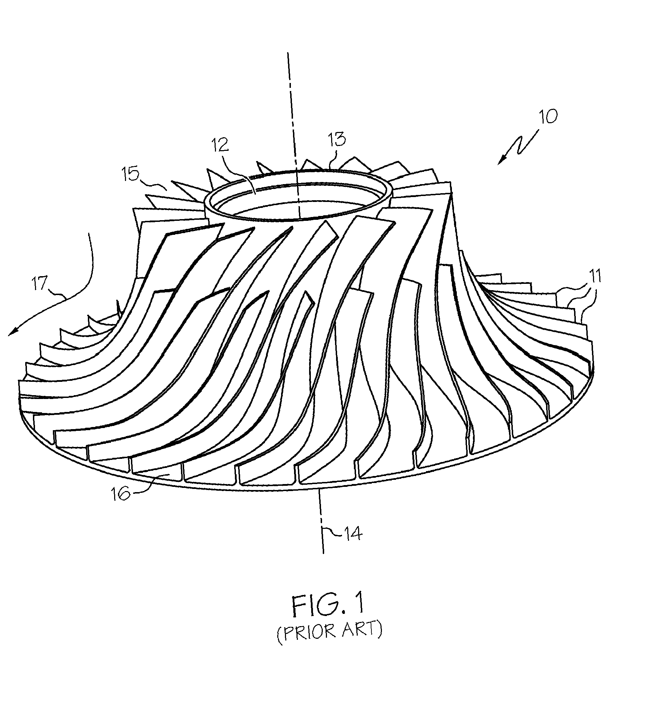

Referring now to FIG. 1 there is shown a representation of a typical impeller suitable for use with the present invention. An impeller 10 includes a plurality of impeller airfoils 11 attached to a central core 12. The impeller 10 has a generally radial structure and, as shown in FIG. 1, a central bore area 13. In some designs, the impeller 10 is fabricated as a unitary piece with an axle and would not have an open bore area though it would have the corresponding bore region. The central bore area 13 is aligned along an imaginary central axis 14 that runs through the central bore area 13 in an axial direction. In operation, the impeller 10 is disposed on a central axle (not shown) at the central bore area 13 and rotates thereon or rotates with the axle. The plurality of impeller airfoils 11 extend from the central bore area 13 in an outwardly radial and axial direction. The impeller 10 further defines an upstream position 15 and a downstream position 16. The upstream position 15 and the downstream position 16 correspond to the fluid path flow through and across the impeller 10. Fluid, air, first enters the impeller 10 at the upstream position 15 (inducer). As air passes the impeller 10 it exits in the downstream position 16 (exducer). Air passing across the impeller 10 is pressurized such that the air exiting the impeller 10 is at a higher temperature and pressure relative to the air entering the impeller 10. The direction of an air flow 17 is across the face of the impeller 10, the face being that portion of the impeller 10 which is exposed to air flow. In operation, the impeller 10 is disposed within a housing or structure (not shown) which, by close proximity to the plurality of impeller airfoils 11, assists in placing the air under pressure.

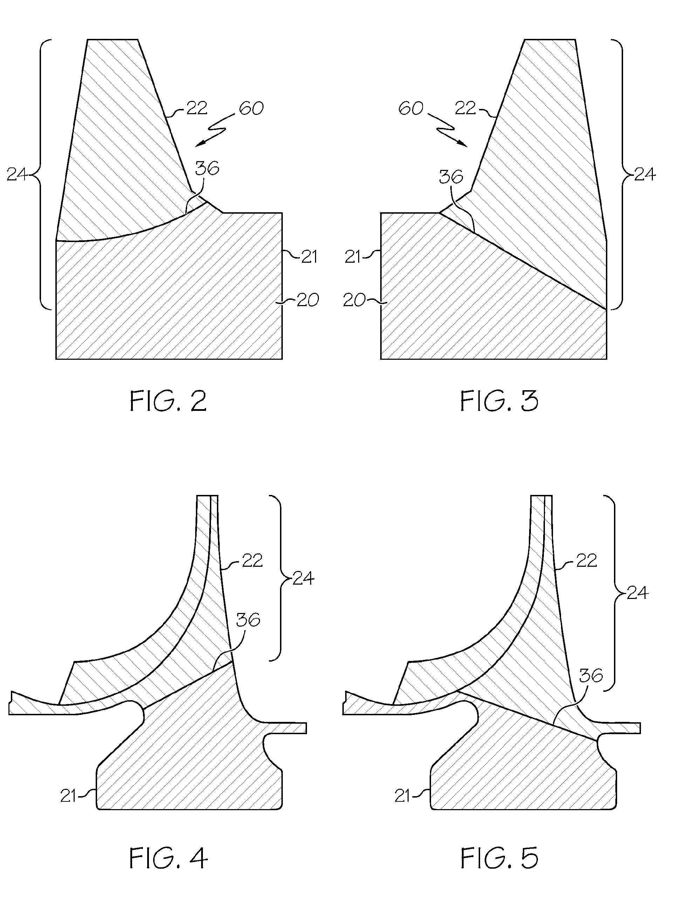

In the impeller configuration as shown in FIG. 1, the plurality of impeller airfoils 11 press against air as the impeller 10 rotates. The plurality of impeller airfoils 11 act to compress the air. The rotation of the impeller 10 during this compression imparts high tensile stresses in the central bore area 13. Simultaneously, air that exits the impeller 10 at the downstream position 16 (exducer) is typically at a much higher temperature than compared to the air entering in the upstream position 15 (inducer). Temperatures in excess of 1350°F (732 degree Celsius) can be experienced at the downstream position 16 (exducer). Thus, the structure in the downstream position 16 and on a back face 24 (FIG. 2) are particularly subject to high temperature creep and fatigue.

It has now been discovered that an impeller can be designed and manufactured so that the impeller is comprised of dual microstructures, wherein a microstructure of a bore region is different than the microstructure of a body region. In one preferred embodiment, dual microstructures form an intermediate forging that may itself be further machined into a finished impeller. The finished impeller thus incorporates the dual microstructure of the intermediate forged structure.

The material properties resulting from the dual microstructure are selected so that material performance is optimized given the location of the material in the final product. The fine grain material properties in the area of the impeller bore are optimized for low cycle fatigue resistance and burst strength. Similarly, the coarse grain material properties in the area of the fluid exit are optimized for high temperature creep resistance. Referring now to FIGs. 2-5, illustrated are exemplary embodiments of the material properties in a silhouette of an impeller cross-section. In each of the illustrated embodiments, a bore region 20 represents a bore region of a typical impeller, and a body region 22 represents a rim region.

In a preferred embodiment, the bore region 20 is fabricated having a specific fine grain microstructure, and the body region 22 is fabricated having a specific coarse grain microstructure that is different than the microstructure of the bore region 20. The differing microstructures of the bore region 20 and the body region 22 define a microstructure interface 36. It should be understood that a slope of the microstructure interface 36, as illustrated in FIGs. 2-5, is design specific and may vary according to specific fabrication parameters employed.

Each of the bore region 20 and the body region 22 may be formed through known methods of powder metallurgy, extrusion, isothermal forging, heating, and machining (described presently). The bore region 20 and the body region 22 may further include flanges, thrust faces, and other shapes (not shown) that assist in the manufacture process and ultimately be machined away in order to yield a finished impeller shape. The body region 22 may include the airfoils described in FIG. 1 or material from which such airfoils may subsequently be formed.

The back face 24 is an area of an impeller where the elevated temperature properties of the material are important. Although the temperature is higher at the blade tip, the stress is also lower at the tip. It has been discovered that the back face 24 is generally an area where the stress and temperature combination becomes more critical. Thus, in a preferred embodiment, the properties of the region of the back face 24 are considered with respect to creep resistance.

In a preferred embodiment, the material used in the fabrication of the dual microstructure impeller is a high strength superalloy. Superalloys that may be utilized to fabricate the dual microstructure include a nickel (Ni) based superalloy such as an atomized powder metal (PM) alloy 10 or other similar material. The material is chosen due to its inherent low cycle fatigue (LCF) and tensile properties at bore conditions, typically at or near 1050°F (565.6 degree Celsius) and excellent oxidation and creep/stress rupture properties at body or rim conditions, typically at or near 1350°F (732 degree Celsius) and above. The microstructure of the body region 22 is preferably formed having improved creep resistance when exposed to temperatures in a range of between about 1250°F (676.7 degree Celsius) to about 1500°F (815.6 degree Celsius) that is greater than the creep resistance of the bore region 20, when exposed to temperatures in the same range.

A preferred embodiment has been described as a method to fabricate an intermediate structure including dual microstructure regions. The finished impeller may be fabricated of more than two regions having different microstructures. It is preferred during the fabrication process that the microstructure interface 36 be linear in cross section. However, other shapes for the microstructure interface 36 may be formed. For example, in cross section, the microstructure interface36 may include composite interfaces of differing angles, curves, or other complex shapes.

As previously stated, both the bore region 20 and the body region 22 may themselves be cast, forged or formed by powder metallurgy techniques or otherwise machined so as to minimize the material that must be removed in order to create the impeller. The body region 22 need not have a typical outer shape in the form of a cylinder, but may take other shapes. The bore region 20 may initially be formed so that it has a hollow axial area (not shown) that corresponds to where a central bore area would appear, if such an area is part of the design of a finished impeller such as the central bore area 13 of FIG. 1. Alternatively, the bore region 20 may be formed with an integral axle.

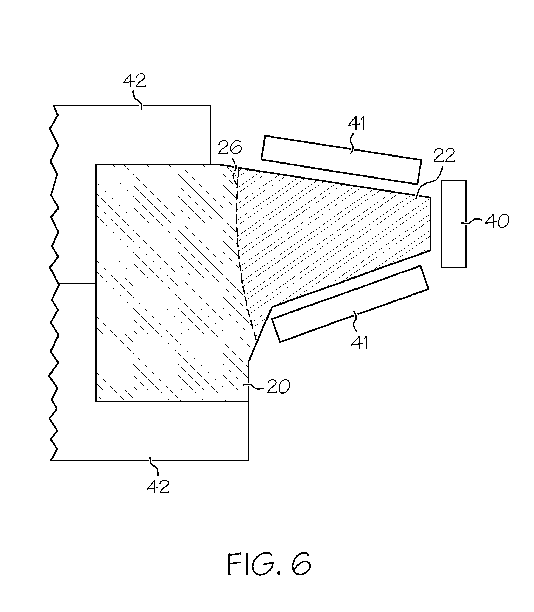

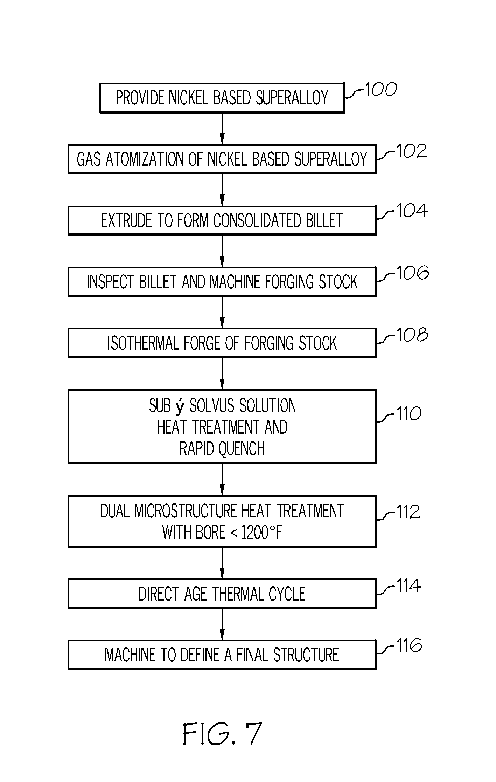

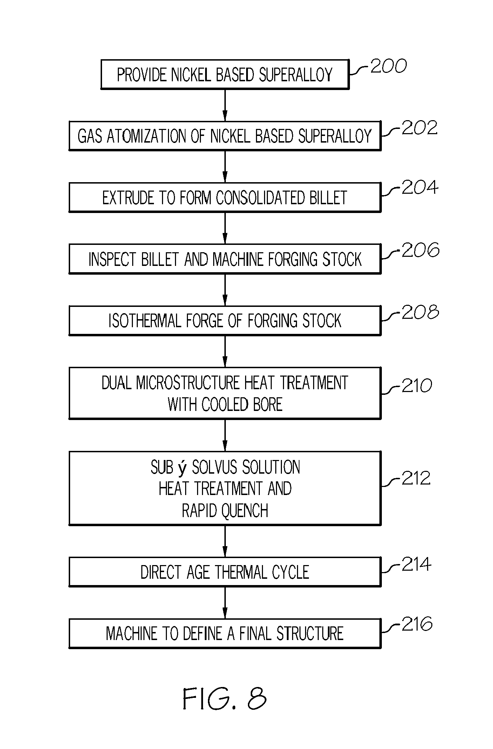

Turning now to FIGs. 6-8, exemplary methods of forming a dual microstructure impeller are illustrated with FIG. 6 showing a specific step in a method, and FIGs. 7 and 8 outlining alternative methods in flow diagrams. In a preferred embodiment, a bore region and a body region are formed as a single unitary intermediate structure, each region defining unique microstructure properties. Referring now to FIG. 7, provided as step 100 is a nickel based superalloy material for fabricating a bore region and a body region, similar to the bore region 20 and body region 22 described in FIGs. 2-5. Initially, the nickel based superalloy undergoes gas atomization, as step 102, resulting in an atomized nickel based superalloy powder. The atomized nickel based superalloy powder undergoes hot extrusion to form a fine grained compacted billet, as step 104. Subsequent to the extrusion processing, the compacted nickel based superalloy billet undergoes inspection and is machined to forging stock, as step 106. The forging stock is then isothermally forged to a shape that encapsulates the final component volume, as step 108. The resultant forging is of uniform fine grain size. During the forging process, as an optional parameter, the forging strain may be increased, thereby providing energy for additional grain growth in the body region 22 of the impeller. This additional grain growth (described presently) would provide for increased impeller performance capability at higher temperatures, such as temperatures at or near 1450°F (788 degree Celsius).

In a preferred embodiment the impeller manufacturing process may include heat treatments that are designed to control stresses and optimize the microstructure of the structure, as steps 110 and 112. It will be understood by those skilled in the art that a particular heat treatment may be tailored depending on the desired resultant microstructure, and more particularly desired grain size of each of the bore region 20 and the body region 22. Accordingly, preferred heat treatments can be defined in terms of the microstructure that results from the treatment. As previously described, a nickel based superalloy is preferred for both the bore region 20 and the body region 22. When these materials are used, the following described heat treatments are preferred.

As best illustrated by step 110 in FIG. 7, and by the structure illustrated in FIG. 2-5, subsequent to the isothermally forging process the forged element is submitted to a dual microstructure heat treatment. More specifically, the forged element is subjected to a sub γ' solvus heat treatment and rapid quench to achieve high bore region tensile properties and a fine grain size. With reference to FIG. 6, after sub γ' solvus solution heat treatment the bore region 20, is positioned relative to a cooling chill plate 42 and the body region 22, is positioned relative to a plurality of heating elements 41. Through a process of active liquid cooling, the bore region 20 is maintained at a temperature below 1000°F during the dual microstructure heat treatment procedure while the body region 22 is heated above the γ' solvus of the PM nickel based superalloy. The process results in an intermediate structure 60 (FIGs. 2 and 3) comprising a bore region 20 having a grain size that is greater than ASTM 10.0, and more specifically a grain size in a range of ASTM 10.0-12.0, and preferably a grain size of ASTM 11.5 ALA 11.0 and a body region 22 having a grain size that is coarser than ASTM 7.0 and more specifically a grain size in a range of ASTM 4.0 to 7.0, and preferably a grain size of ASTM 6.0 ALA 4.0 The dual microstructure forging is then direct aged, as step 114 and machined, as step 116, to reveal a final shape. More specifically, the intermediate structure 60 may be machined to a specified configuration in a step 116, using a combination of conventional and non-conventional machining processes, for further definition of a final dual microstructure impeller. Conventional machining processes may employ, but are not limited to, turning, milling, hole drilling, chemical etch, broach, grinding, hand finish, and shot peening. Non-conventional machining processes may employ, but are not limited to, electrochemical machining (ECM) and electro discharge machining (EDM), and laser shock peening.

In an alternate method, as illustrated in FIG. 8, provided as step 200 is a nickel based superalloy material for fabricating a bore region and a body region, similar to the bore region 20 and body region 22 described in FIG. 2. Initially, the nickel based superalloy undergoes gas atomization, as step 202, resulting in an atomized nickel based superalloy powder. The atomized nickel based superalloy powder undergoes hot extrusion to form a fine grained compacted billet, as step 204. Subsequent to the extrusion processing, the compacted nickel based superalloy billet undergoes inspection and is machined to forging stock, as step 206. The forging stock is then isothermally forged to a shape that encapsulates the final component volume, as step 208. The resulting forging is of uniform fine grain size. As previously eluded to, during the forging process, the forging strain may be increased, thereby providing energy for additional grain growth in the body region 22 of the impeller. More specifically, during isothermal forging, step 208, the forged element is submitted to increased strain locally in the body region 22 and then submitted to a dual microstructure heat treatment. More specifically, and as previously described with reference to FIG. 6, the bore region 20, is positioned relative to a cooling chill plate 42 and the body region 22, is positioned relative to a plurality of heating elements 41. Through a process of active cooling, the bore region 20 is maintained at a temperature below 1000°F during the dual microstructure heat treatment to maintain the morphology locally of the γ' phase particles, while the body region 22 is heated above the γ' solvus of the PM nickel based superalloy. This process results in an intermediate structure 60 (FIGs. 2 and 3) comprising a bore region 20 having a grain size that is greater than ASTM 10.0, and more specifically a grain size in a range of ASTM 10.0-12.0, and preferably a grain size of ASTM 11.5 ALA 11.0 and a body region 22 having a grain size that is smaller than ASTM 7.0 and more specifically a grain size in a range of ASTM 0.0 to 7.0, and preferably a grain size of ASTM 4.0 ALA 2.0. The intermediate structure 60 is then sub γ' solvus solution heat treated and rapidly quenched, as step 212.

Following step 212, the intermediate structure 60 undergoes a direct aging treatment as step 214. During this treatment step, the intermediate structure 60 is heated to approximately 1400°F. The goal of this step is to impart optimum mechanical properties for the application. As a final step, the intermediate structure 60 may be machined to a specified configuration in a step 216, using a combination of conventional and non-conventional machining processes as detailed with respect to FIG. 7, for further definition of a final dual microstructure impeller.

It will be understood by those skilled in the art that the target microstructures in the bore region 20 and the body region 22 may be achieved while deviating from the above-described specific heating temperatures due to heating times. For example a material may be heated at a slightly higher temperature for a shorter time period, or, heated at a slightly lower temperature for a longer period of time. Thus, it is still within the invention to deviate from the specific heating schedule while achieving the finished dual microstructures.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A method for fabricating a dual microstructure machinable element comprising the steps of:
providing an intermediate structure (60) including a bore region (20) comprising a nickel based superalloy having a grain size that is finer than ASTM 10.0 and a body region (22) comprising a nickel based superalloy having a grain size that is coarser than ASTM 7.0, the bore region (20) and the body region (22) defining a microstructure interface (36); and
machining the intermediate structure (60) to define the dual microstructure machinable element.

2. A method as claimed in Claim 1, wherein the nickel based superalloy comprises atomized powder metal (PM) alloy 10.

3. A method as claimed in Claim 2, wherein the bore region (20) comprises a grain size in a range of ASTM 10.0 to 12.0.

4. A method as claimed in Claim 3, wherein the bore region (20) comprises a grain size of ASTM 11.5 ALA 11.0.

5. A method as claimed in Claim 2, wherein the body region (22) comprises a grain size in a range of ASTM 4.0 to 7.0.

6. A method as claimed in Claim 5, wherein the body region (22) comprises a grain size of ASTM 6.0 ALA 4.0.

7. A method as claimed in Claim 2, wherein the body region (22) comprises a grain size in a range of ASTM 0.0 to 5.0

8. A method as claimed in Claim 7, wherein the body region (22) comprises a grain size of ASTM 4.0 ALA 2.0.

9. A method as claimed in Claim 1, wherein the step of providing an intermediate structure (60) comprises providing an atomized powder metal nickel based superalloy, extruding the atomized powder metal nickel based superalloy to form a consolidated billet, isothermally forging the consolidated billet to form a forged material, and heat treating the forged material to define a dual microstructure comprising a fine grain bore of greater than ASTM 10.0 and coarse grain rim of less than ASTM 6.0.
